# EUROPÄISCHE PATENTSCHRIFT

(11) **EP 1 548 276 B1**
(45) Veröffentlichungstag und Bekanntmachung des Hinweises auf die Patenterteilung: **08.07.2009**
(21) Anmeldenummer: 03029840.0
(22) Anmeldetag: 24.12.2003
(51) Int. Cl.: F03B 13/08, F03B 13/26, F03B 15/02, F03B 15/14, F03B 17/06

(54) **Laufwasserkraftwerk bestehend aus einer Turbine und Wehren zur Gewinnung elektrischer Energie aus fliessenden Gewässern und Tidengewässern**
Water turbine assembly comprising a turbine and sluices for the production of electrical energy from flowing waters or tides.
Turbine à eau avec un rotor et barrages pour la production d'énergie électrique avec de l'eau courante ou des marées

(43) Veröffentlichungstag der Anmeldung: 29.06.2005
(60) Teilanmeldung: 07106692.2
(73) Patentinhaber: Zenker, Wolfgang, 4810 Gmunden (AT)
(72) Erfinder: Zenker, Wolfgang, 4810 Gmunden (AT)

(56) Entgegenhaltungen:
- DE-C- 88 676
- FR-A- 2 284 779
- US-A- 4 053 787
- US-B1- 6 208 037
- PATENT ABSTRACTS OF JAPAN Bd. 007, Nr. 187 (M-236), 16. August 1983 (1983-08-16) -& JP 58 088470 A (HITACHI SEISAKUSHO KK), 26. Mai 1983 (1983-05-26)
- DATABASE WPI Section PQ, Week 198510 Derwent Publications Ltd., London, GB; Class Q42, AN 1985-060434 XP002318038 -& SU 1 079 741 A (SIBE VEDNEEV HYDROT) 15. März 1984 (1984-03-15)

## Beschreibung

Nach dem Stand der Technik werden Laufwasserkraftwerke gebaut, indem unter Ausnutzung der topographischen Gegebenheiten Staustufen errichtet werden, um Fallhöhe zu gewinnen. Hierzu sind über die Ausbaustrecke der Gewässer Stauräume zu schaffen und durch Staudämme abzuschliessen. Dies ist mit erheblichem Aufwand an wasserbaulichen Massnahmen und entsprechendem Landschaftsverbrauch verbunden. Aus diesem Grund wird die Nutzung der Wasserkraft zur Gewinnung regenerativer Energie als weitgehend abgeschlossen angesehen, obwohl noch in erheblichem Umfang ungenutzte Gewässer vorhanden sind, deren Nutzung gegenwärtig als unwirtschaftlich gilt. Dem Anmelder sind konkurrierende Erfindungen nicht bekannt geworden, daher können keine Fundstellen genannt werden.

Die aus einem Gewässer mit der Fliesse **Q** in m³ / s und der Fallhöhe **H** in m gewinnbare mechanische Bruttoenergie ist: **P** = γ_{Wasser}* Q* H. Schon aus dieser Beziehung wird deutlich, dass die Höhe der "Hebelarm" ist, um möglichst viel Energie aus einem fliessenden Gewässer zu gewinnen. Dies ist mit einem entsprechend grossen baulichen Aufwand verbunden.

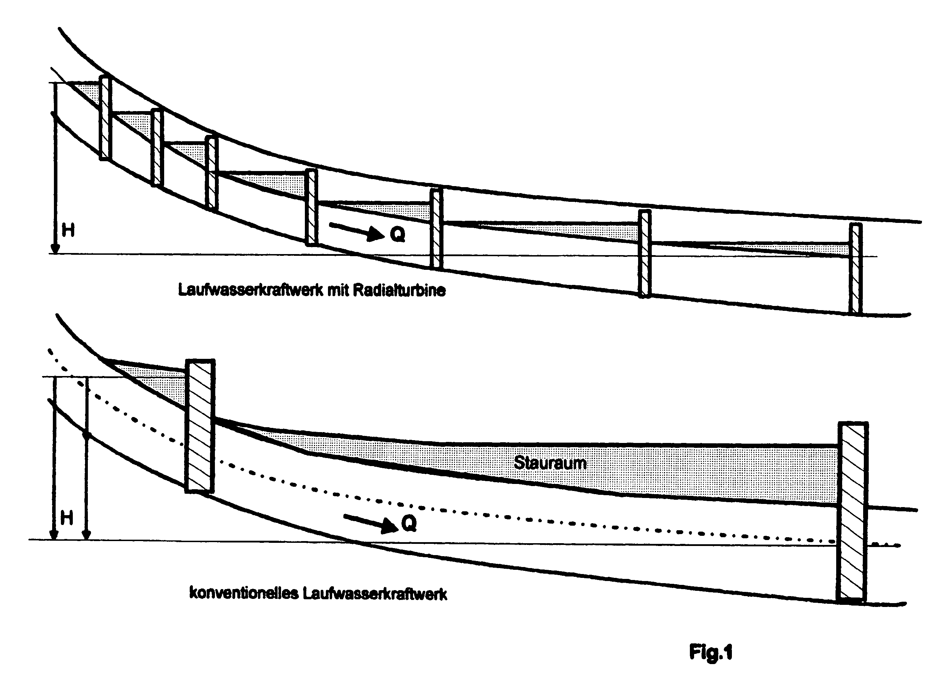

Die Erfindung zeigt eine technische und wirtschaftliche Alternative auf, indem jedes Laufwasserkraftwerk bestehend aus Radialturbine und Wehren direkt in das Gewässerbett eingebaut wird und seine eigene Stauhöhe erzeugt. Auf diese Weise werden die Fallhöhen weniger sehr teurer Kraftwerke durch die Summe der Fallhöhen mehrerer sehr kostengünstiger Kraftwerke ersetzt, die zudem kaum einen Eingriff in die Landschaft darstellen (Fig. 1).

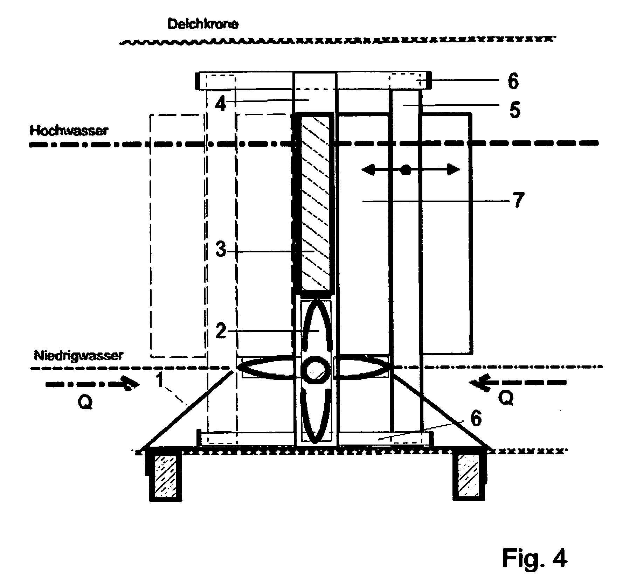

Es sind Erfindungen bekannt, welche die Energie fließender Gewässer mit Hilfe von Radialturbinen nutzen wollen. Ein Beispiel ist in Dokument US 4053787 dargestellt. Die Schrift zeigt in **Fig. 1(32)** ein Wehr, vor dem das Oberwasser gestaut wird. Dieses wird tangential über ein Wasserrad **Fig. 4** **(120),**

**Fig. 6** geleitet. Hier soll sowohl die potentielle Energie des Höhenunterschiedes als auch ein Teil der kinetischen Energie der Strömung genutzt werden. Es handelt sich um das bekannte oberschlächtige Wasserrad. Die nutzbare Stauhöhe ist lediglich die geringe Überfallhöhe über das Wehr. Die durch Stauung gewonnene Höhendifferenz dient ausschließlich dazu, das Wasserrad vor einer Gegenhöhe im Unterwasser zu sichem. Das Moment wird hauptsächlich durch Gewichtskraft erzeugt.

Dokument JP 580 88470 zeigt ein Wasserrad **(1)**, dem ein Wasserstrom **(3)** aus höherem Niveau **Fign. 1****,****3** tangential zugeführt wird. Ein Regelmechanismus **Fig 6 (14-19)** soll das Niveau des Unterwassers in einem zulässigen Höhenbereich halten. Auch dies ist ein oberschlächtiges Wasserrad. Die Kraftwirkung wird vomehmlich durch den Impuls der herabstürzenden Wassermasse erzeugt, ähnlich der Peltonturbine, zumal - wie bei dieser - der Wasserstrom durch eine düsenartige Konstruktion eingeengt wird.

Zur Nutzung von Gezeitenenergie ist ein Verfahren bekannt unter Patent DE 88 676 C (R. Knobloch). Es besteht aus einer Wasserkammer, einer auf Schwimmem ruhende Kraftmaschine, welche in Abhängigkeit vom Niveau des Wasserspiegels gehoben und gesenkt wird und Schützen, welche der Absperrung der Kammer gegen die Seeseite und einen Sammler im Hinter land dienen. Durch das jeweilige Öffnen und Schließen der Schützen in Abhängigkeit von der Tide und das Nachführen des Niveaus des Laufrades der Kraftmaschine soll die potentielle Energie des zu- und ablaufenden Wassers genutzt werden.

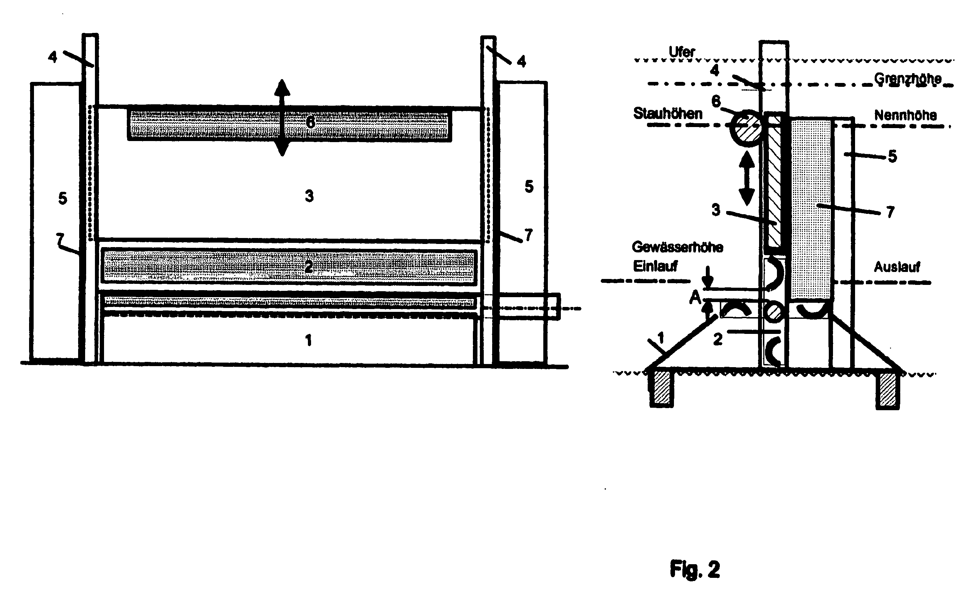

Die Ausgestaltung der Erfindung ist in **(****Fig. 2****)** dargestellt. Sie besteht aus einer Radialturbine mit Leitwerk **(1)** und Läufer **(2).** Die untere Hälfte des Leitwerkes verringert den Einlaufquerschnitt und führt dem Läufer das Wasser radial mit erhöhter Geschwindigkeit zu. Die obere Hälfte des Leitwerkes ist als Wehr, genannt Mittelwehr **(3)** ausgebildet, welches sich in seitlichen Führungen **(4)** vertikal bewegen kann. Auch das Mittelwehr begrenzt den Einlaufquerschnitt. Es ist über der Längsachse des Läufers angeordnet. An der Vorderseite dieses Wehres ist ein Schwimmkörper **(6)** befestigt, welcher mit veränderlichem Wasserstand die erforderliche Kraft für diese Bewegung erzeugt. Der Läufer besteht aus vier Schaufeln die so in einem Abstand **A** an der Welle angeschlossen sind, dass zu dieser ein freier Querschnitt verbleibt, durch den das Wasser unabhängig von der Drehzahl des Läufers ungehindert strömen kann. Zusätzlich zu dieser Anordnung befinden sich an beiden Seiten der Turbine schmale feststehende Seitenwehre **(5)**, welche parallel zur hinteren Begrenzung des Läufers angeordnet sind. Der entstehende Zwischenraum zum Mittelwehr ist zur Vermeidung hydraulischer Verluste verschlossen **(7)**. Diese ganze Anordnung ist auf einen Rahmen montiert und kann direkt auf Fundamenten oder hängend an Trägern in das Bett des Gewässers eingebaut werden. Die Turbine treibt über das Getriebe einen Asynchrongenerator an, der im einfachsten Fall polumschaltbar ist und mit einer niedrigen oder hohen Drehzahl läuft. Eine modifizierte Ausführung zum Einsatz in flachen Tidengewässern zeigt **Fig. 4****.**

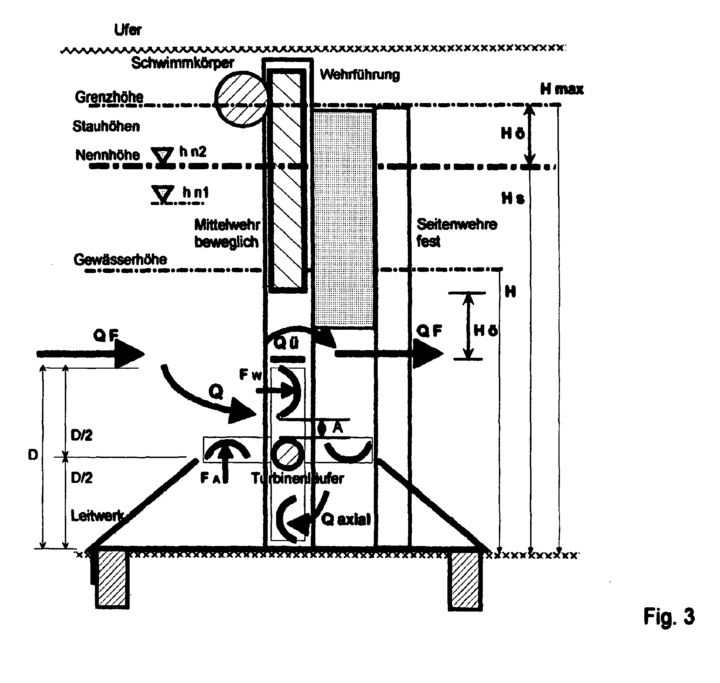

Die physikalische Wirkung ist aus **Fig. 3** ersichtlich. Das Gewässer mit der Fliesse Q_{F} in m³/s fliesst bei gegebenem Querschnitt des Bettes in der Höhe H mit der Geschwindigkeit **v_{F}.** Die mit kleiner Generatordrehzahl laufende Turbine lässt bei gegebener Läuferdrehzahl einen Volumenstrom Q durchströmen, welcher kleiner als **Q_{F}** ist, weshalb der Wasserstand steigt. Das Bett des Gewässers vor der Turbine wird bis zu einer zulässigen Nennhöhe Hₙₑₙₙ Stauraum. Würde nun die Turbinendrehzahl auf einen Wert eingestellt, bei dem Q = Q_{F} ist, dann bliebe diese Höhe konstant und es ergäbe sich eine Höhendifferenz vor und hinter der Turbine von ΔH = Hₙₑₙₙ - **H**.

An der Umsetzung der potentiellen Energie Q_{F} - ΔH in mechanische Energie sind die vertikale und horizontale Schaufel des Läufers beteiligt. Auf die vertikale Schaufel wirken der statische Druck dieser Höhe und der Staudruck der Strömung bei der gegebenen Läuferdrehzahl. Beide erzeugen die Widerstandskraft **F_{w}**. Auf der Oberseite der horizontalen Schaufel wird durch die erhöhte Geschwindigkeit der Strömung und den mit noch höherer Geschwindigkeit durch den freien Querschnitt zwischen Schaufel und Welle strömenden Teilstrom ein Unterdruck erzeugt, während auf der Unterseite der volle statische Druck wirksam ist. Es entsteht ein Moment durch die Auftriebskraft F_{A}. Der Unterdruck ist das Ergebnis der beschriebenen Gestaltung des Läufers.

Der durch Auftrieb erzeugte Leistungsanteil wird gedeckt durch den Volumenstrom Qₐₓᵢₐₗ, der getrieben durch die Höhendifferenz ΔH vor den Seitenwehren, in die untere Läuferhälfte strömt und sich im Läufer mit Q zu Q_{F} vereinigt. Dies gilt, weil bei der Stauhöhe Hₙₑₙₙ das Mittelwehr geschlossen und somit kein Überlauf Q_{ü} vorhanden ist.

Wird die Fliesse des Gewässers grösser, dann erhöhen sich die Gewässerhöhe und die Geschwindigkeit. Um Überlauf zu vermeiden, muss auch die Drehzahl der Turbine erhöht werden. Wird deren maximale Drehzahl erreicht, dann wird bei weiterer Erhöhung von Q_{F} das Mittetwehr automatisch durch den Schwimmkörper geöffnet, um einen weiteren nennenswerten Anstieg des Gewässers zu verhindern.

Wenn die Turbinendrehzahl nicht wie beschrieben stufenlos eingestellt wird, sondern nur zwei feste Werte annehmen kann, dann wird bei Erreichen von Hₙₑₙₙ = Hn₂ auf die höhere Drehzahl n₂ umgeschaltet. Da nun die Summe von Q und Qₐₓᵢₐₗ größer als Q_{F} ist, wird das Niveau Hn₁ erreicht und dort wieder auf die niedrige Drehzahl n₁ umgeschaltet.

Vergleicht man die erforderlichen Stauhöhen über dem Gewässerspiegel dann stellt man fest, dass sie bei dem beschriebenen Laufwasserkraftwerk deutlich geringer als bei einem konventionellen Laufwasserkraftwerk sind. Die ursprüngliche Gewässerhöhe ist Teil der Stauhöhe und ein erheblicher Leistungsanteil wird *wegen der spezifischen Gestaltung des Läufers* durch Auftrieb erzeugt. Bei einem konventionellen Laufwasserkraftwerk wären für die errechneten Leistungen Stauhöhen weit über Uferhöhe hinaus erforderlich, weil hier allein die statische Höhendifferenz zur Leistungserzeugung genutzt wird. Diese muss jedoch erst oberhalb des jeweiligen Gewässerspiegels aufgebaut werden.

In **Fig. 4** ist die Ausgestaltung der Erfindung bei Einsatz in Tidengewässem dargestellt Das Mittelwehr **(3)** ist in seitlichen Halterungen **(4)** fixiert, da in dieser Anwendung kein Überlauf erforderlich ist Die Seitenwehre **(5)** sind dagegen in Führungen **(6)** horizontal beweglich ausgeführt. Sie werden durch die wechselnde Strömungsrichtung jeweils an die entgegengesetzte hintere Begrenzung des Turbinenläufers gedrückt. Der Verschluss des Zwischenraums zwischen dem Mittelwehr und den Seitenwehren erfolgt durch Platten **(7),** die an den Seitenwehren befestigt sind. Die Beschaufelung des Turbinenläufers **(2)** ist so gestaltet, dass dieser je nach Strömungsrichtung beidseitig beaufschlagt werden kann.

Aus dem Dargelegten leitet sich die gewerbliche Bedeutung ab: Mit vergleichsweise geringem Aufwand kann auch aus bisher ungenutzten untergeordneten Gewässern oder aus flachen Tidengewässern in erheblichem Umfang regenerative Energie durch Wasserkraft gewonnen werden. Ein nennenswerter Eingriff in die Landschaft durch Bauwerke ist nicht gegeben, so dass Akzeptanzprobleme in der Öffentlichkeit nicht zu erwarten sind.

## Patentansprüche

1. Laufwasserkraftwerk bestehend aus einer Turbine und Wehren, zur Gewinnung elektrischer Energie aus fliessenden Gewässern oder flachen Tidengewässem wobei
- als Turbine eine Radialturbine eingesetzt wird, welche aus einem Leitwerk **(Fig. 2 (1))** und einem Läufer **(Fig. 2 (2))** besteht;
- das Leitwerk nur die obere Läuferhälfte für den Einlauf des Gewässers freigibt und damit dem Läufer das Wasser radial und mit erhöhter Geschwindigkeit zuführt;
- die Schaufeln des Läufers in einem Abstand **(A)** so an die Läuferwelle angeschlossen sind, dass zu dieser ein freier Querschnitt entsteht, durch den das Wasser ungehindert strömen kann,
**dadurch gekennzeichnet**
**dass** ein über der Längsachse des Läufers angeordnetes Mittelwehr **(Fig. 2 (3); Fig. 4 (3))** ebenso wie das Leitwerk der Turbine die Höhe des Einlaufquerschnittes auf den Läuferradius begrenzt.

2. Laufwasserkraftwerk nach Patentanspruch 1, **dadurch gekennzeichnet**
- **dass** das Mittelwehr ein über der Längsachse des Läufers angeordnetes, beweglich geführtes und durch einen Schwimmkörper **(Fig. 2 (6))** entsprechend dem Wasserstand hebbares Wehr ist;
- **dass** feste Seitenwehre **(Fig. 2 (5))** auf beiden Seiten des Turbinenläufers, parallel zu dessen hinterer Begrenzung angeordnet, eine statische Gewässerhöhe vor dessen seitlichen Öffnungen erzeugen;
- **dass** die durch die versetzte Anordnung zwischen Seitenwehren und Mittelwehr vorhandenen Öffnungen zur Vermeidung hydraulischer Verluste verschlossen sind.

3. Laufwasserkraftwerk nach Patentanspruch 1, **dadurch gekennzeichnet,**
- **dass** bei einem Einsatz in Tidengewässern das Mittelwehr fest angeordnet ist;
- **dass** Seitenwehre **(Fig. 4 (5)),** auf beiden Seiten des Turbinenläufers angeordnet, beweglich ausgeführt sind und durch die wechselnde Strömungsrichtung jeweils an die entgegengesetzte hintere Begrenzung des Turbinenläufers gedrückt werden;
- **dass** durch beidseitig an den Seitenwehren befestigte Platten **(Fig. 4 (7))** die Öffnungen zwischen den Seitenwehren und dem Mittelwehr verschlossen werden;
- **dass** die Beschaufelung des Turbinenläufers **(Fig. 4 (2))** für beidseitige Beaufschlagung ausgelegt ist.

## Claims

1. A running water power station comprising a turbine and weirs for the generation of electric power from flowing waters or shallow tidal waters, wherein
- the turbine used is a radial turbine consisting of a stream deflector **(Fig. 2 (1))** and a rotor **(Fig. 2 (2));**
- the stream deflector leaves only the upper rotor half open for allowing an inflow of water thus supplying the water to the rotor radially and at increased speed;
- the vanes of the rotor are connected to the rotor shaft at a distance **(A)** in such a way that a free cross-section, through which the water can flow unhindered, is formed between the vanes and the rotor shaft,
**characterized in that**
a central weir **(Fig. 2 (3); Fig. 4 (3)),** which is arranged above the longitudinal axis of the rotor, as well as the stream deflector of the turbine limit the height of the inlet cross-section to the rotor radius.

2. A running water power station according to claim 1, **characterized in that**
- the central weir is a movably guided weir, which is arranged above the longitudinal axis of the rotor and adapted to be raised by a floating body **(Fig. 2 (6))** in accordance with the water level;
- fixed lateral weirs **(Fig. 2 (5)),** which are arranged on either side of the turbine rotor parallel to the rear boundary thereof, produce a static water height before the lateral openings of the turbine rotor,
- the openings formed due to the displaced mode of arrangement between the lateral weirs and the central weir are closed so as to avoid hydraulic losses.

3. A running water power station according to claim 1, **characterized in that**
- when used in tidal waters, the central weir is arranged fixedly;
- lateral weirs **(Fig. 4 (5)),** which are arranged on either side of the turbine rotor, are implemented as movable weirs and are pressed by the alternating direction of flow against the respective opposite rear boundary of the turbine rotor,
- the openings between the lateral weirs and the central weir are closed by means of plates **(Fig. 4 (7)),** which are secured to the lateral weirs on both sides;
- the vanes of the turbine rotor **(Fig. 4 (2))** are implemented such that they can be acted upon on both sides.

## Revendications

1. Usine-barrage hydroélectrique comprenant une turbine et des barrages, pour la production d'énergie électrique dans des cours d'eau ou dans des eaux peu profondes exposées aux courants de la marée,
- ladite usine-barrage utilisant comme turbine une turbine radiale compris d'un déflecteur **(fig. 2(1))** et d'un rotor **(fig. 2(2));**
- ledit déflecteur ne laissant libre que la moitié supérieur du rotor pour l'amenée d'eau et de ce fait amenant l'eau au rotor radialement et à vitesse élevée;
- les pales du rotor étant reliées avec un espacement **(A)** à l'arbre du rotor, de manière à produire un diamètre libre par rapport à celui-ci, l'eau pouvant couler librement à travers dudit diamètre;
**caractérisée en ce que**
un barrage médian **(fig. 2(3); fig.4(3))** agencé au-dessus de l'axe longitudinal du rotor ainsi que le déflecteur de la turbine limitent la hauteur du diamètre d'admission au diamètre du rotor.

2. Usine-barrage hydroélectrique selon la revendication 1, **caractérisée en ce que**
- ledit barrage médian est un barrage disposé au-dessus de l'axe longitudinal du rotor, à guidage mobile et élévable suivant le niveau d'eau au moyen d'un corps flottant,
- des barrages latéraux **(fig. 2 (5))** agencés des deux côtés du rotor de la turbine parallèlement à la limitation arrière de celui-ci produisent une hauteur d'eau statique devant les ouvertures laterales de celui-ci;
- les orifices crées par la disposition décalée entre les barrages latéraux et le barrage médian sont fermés afin d'éviter des pertes hydrauliques.

3. Usine-barrage hydroélectrique selon la revendication 1, **caractérisée en ce que**
- le barrage médian est disposé de manière fixe lors de son utilisation dans des eaux exposées aux courants de la marée;
- des barrages latéraux **(fig. 4(5))** disposés des deux côtés du rotor de la turbine sont du type mobile et sont chacun pressés par les directions alternantes des courants contre la limitation arrière opposée du rotor de la turbine;
- les orifices entre les barrages latéraux et le barrage médian sont fermés par des plaques **(fig. 4(7))** fixées des deux côtés aux barrages latéraux;
- l'aubage du rotor de la turbine **(fig. 4(2))** est conçu de façon à permettre une alimentation en eau des deux côtés.
